# EUROPEAN PATENT APPLICATION

(11) **EP 4 592 673 A1**
(43) Date of publication of application: **30.07.2025**
(21) Application number: 25153199.2
(22) Date of filing: 21.01.2025
(51) Int. Cl.: G01N 29/14, G01M 13/028, G01M 13/021, G01M 15/14, F01D 21/00, G01H 1/00, F16H 57/01, G01N 29/44

(54) **ACOUSTIC SENSOR MONITORING FOR TURBINE ENGINE GEARBOX**

(30) Priority: 29.01.2024 US 202418424970
(71) Applicant: General Electric Company, Evendale, Ohio 45215 (US)
(72) Inventor: MILLER, Brandon, Evendale, 45241 (US); SIBBACH, Arthur William, Boxford, 01921 (US); HUDECKI, Andrew, Evendale, 45241 (US); KHALID, Inenhe Mohammed, West Chester, 45069 (US)
(74) Representative: Openshaw & Co.

(57) **Abstract**

A system may include a first acoustic sensor (102), a processor (104) operatively connected to the first acoustic sensor (102), and a memory (106) operatively connected to the processor (104). The memory (106) has stored therein a plurality of acoustic signatures (108) indexed according to an associated operating condition of a turbine engine (10). The processor (104) is configured to receive acoustic data from the first acoustic sensor (102), identify a current operating condition of the turbine engine (10), select one of the plurality of acoustic signatures (108) in the memory (106) based on the current operating condition, generate comparison results using the one of the plurality of acoustic signatures (108) selected and the acoustic data, and identify that a maintenance condition is present for a gearbox (46) of the turbine engine (10) when the comparison results indicate a deviation that is greater than or equal to a preset threshold.

## Description

### TECHNICAL FIELD

The present disclosure relates generally to jet engines and more particularly to acoustic sensor monitoring for a turbine engine gearbox.

### BACKGROUND

Aircrafts generally employ various types of sensors to gather information about flight conditions, engine operating conditions, and/or conditions of specific subcomponents of the aircraft engine. In particular, temperature sensors or similar can be used to monitor the various engine subcomponents for issues that would require maintenance and/or replacement.

### BRIEF DESCRIPTION OF DRAWINGS

Various needs are at least partially met through provision of the first acoustic sensor monitoring for turbine engine gearboxes described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a cross-sectional view of a gas turbine engine for an aircraft;
FIG. 2 is a block diagram of a monitoring system in accordance with various embodiments of the present disclosure;
FIG. 3 is a block diagram of another monitoring system in accordance with various embodiments of the present disclosure;
FIG. 4A is a cross-sectional view of a mounting gearbox in accordance with various embodiments of the present disclosure;
FIG. 4B shows an enlarged partial cross-sectional side view of a portion of the mounted gearbox of FIG. 4A; and
FIG. 5 is flow diagram of a method in accordance with various embodiments of the present disclosure.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present disclosure. Also, common but well-understood elements that are useful or necessary in a commercially feasible embodiment are often not depicted in order to facilitate a less obstructed view of these various embodiments of the present disclosure. Certain actions and/or steps may be described or depicted in a particular order of occurrence while those skilled in the art will understand that such specificity with respect to sequence is not actually required.

### DETAILED DESCRIPTION

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Current systems for monitoring the health of turbofan engines and/or specific components thereof, such as the gearbox, rely on sensors that are physically attached to a moving element of the turbofan engine or gearbox in order to provide useful measurements. Because the sensors are attached to moving elements, placement locations withing the turbofan engine can be limited. Furthermore, current health monitoring systems are typically limited to searching for a single type of fault and do not offer large flexibility to update which faults are monitored after installation. These are all significant challenges in the context of aviation application settings.

Generally speaking, the various aspects of the present disclosure can be employed with an acoustic sensor used in conjunction with a processor and memory of an aircraft control system to sense an acoustic signature or data of an aircraft engine or subcomponent thereof, such as a gearbox. Such a system can compare the sensed acoustic signature or data to a "control" signature of the engine or gearbox operating normally. The first acoustic sensor can be configured to monitor or target frequencies and amplitudes that represent given components or interfaces. If the processor identifies that the acoustic signature shifts sufficiently (e.g. a difference from the control signature at or beyond a preset threshold is detected), the processor can trigger an alert or similar indicator regarding a need for a maintenance action to prevent a future failure of the engine and/or gearbox. The use of acoustic sensors can increase placement flexibility inside the turbofan engine as compared with currently utilized sensors because the acoustic sensors do not need to be physically located on a moving element to provide meaningful data. Furthermore, the acoustic sensors can offer reduces weight as compared with some types of existing sensors, be set up to identify different types of fault conditions, and/or have improved processing flexibility to update the specific faults that are monitored after installation.

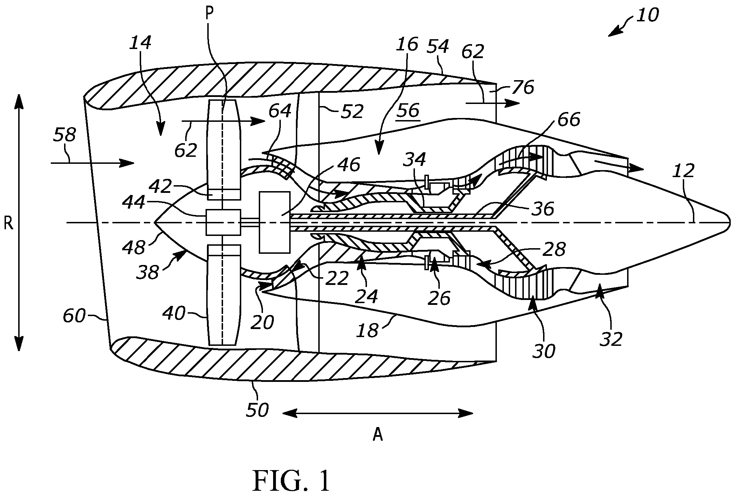

Referring now to the drawings, wherein identical numerals indicate the same elements throughout the figures, FIG. 1 is a cross-sectional view of a gas turbine engine. The gas turbine engine is a high-bypass turbofan jet engine, referred to herein as "turbine engine 10." The turbine engine 10 defines an axial direction A (extending parallel to a longitudinal centerline 12 provided for reference) and a radial direction R. In general, the turbine engine 10 includes a fan section 14 and a core turbine engine 16 disposed downstream from the fan section 14.

The example core turbine engine 16 depicted generally includes a substantially tubular outer casing 18 that defines an annular inlet 20. The tubular outer casing 18 encases, in serial flow relationship, a compressor section including a low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) spool 36 drivingly connects the LP turbine 30 to the LP compressor 22.

The fan section 14 includes a variable pitch fan 38 having a plurality of fan blades 40 coupled to a disk 42 in a spaced apart manner. As depicted, the fan blades 40 extend outwardly from disk 42 generally along the radial direction R. Each of the fan blades 40 is rotatable relative to the disk 42 about a pitch axis P by virtue of the fan blades 40 being operatively connected to a suitable actuation member 44 configured to collectively vary the pitch of the fan blades 40 in unison. The fan blades 40, disk 42, and actuation member 44 are together rotatable about the longitudinal centerline 12 by low pressure spool 36 across a gearbox 46. The gearbox 46 includes a plurality of gears for stepping down the rotational speed of the LP spool 36 to a more efficient rotational fan speed.

Referring still to the example embodiment of FIG. 1, the disk 42 is covered by rotatable front hub 48 aerodynamically contoured to promote an airflow through the plurality of fan blades 40. Additionally, the example fan section 14 includes an annular fan casing or outer nacelle 50 that circumferentially surrounds the variable pitch fan 38 and/or at least a portion of the core turbine engine 16. It should be appreciated that the outer nacelle 50 may be configured to be supported relative to the core turbine engine 16 by a plurality of circumferentially-spaced outlet guide vanes 52. Moreover, a downstream section 54 of the outer nacelle 50 may extend over an outer portion of the core turbine engine 16 to define a bypass airflow passage 56 therebetween.

During operation of the turbine engine 10, a volume of air 58 enters the turbine engine 10 through an associated inlet 60 of the outer nacelle 50 and/or fan section 14. As the volume of air 58 passes across the fan blades 40, a first portion 62 of the air 58 as indicated by arrow is directed or routed into the bypass airflow passage 56 and a second portion 64 of the air 58 as indicated by arrow is directed or routed into the LP compressor 22. The ratio between the first portion 62 of air 58 and the second portion 64 of air 58 is commonly known as a bypass ratio. The pressure of the second portion 64 of air 58 is then increased as it is routed through the HP compressor 24 and into the combustion section 26, where it is mixed with fuel and burned to provide combustion gases 66. Subsequently, the combustion gases 66 are routed through the hot flowpath, or hot-section flowpath, of the HP turbine 28 and the LP turbine 30, where a portion of thermal and/or kinetic energy from the combustion gases 66 is extracted.

The combustion gases 66 are then routed through the jet exhaust nozzle section 32 of the core turbine engine 16 to provide propulsive thrust. Simultaneously, the pressure of the first portion 62 of air 58 is substantially increased as the first portion 62 of air 58 is routed through the bypass airflow passage 56 before it is exhausted from a fan nozzle exhaust section 76 of the turbine engine 10, also providing propulsive thrust.

It should be appreciated, however, that the example turbine engine 10 depicted in FIG. 1 is by way of example only, and that in other example embodiments, aspects of the present disclosure may additionally, or alternatively, be applied to any other suitable gas turbine engine. For example, in other example embodiments, the turbine engine 10 may include an open fan architecture where the outer nacelle 50 is omitted or may instead be any other suitable aeronautical gas turbine engine, such as a turbojet engine, turboshaft engine, turboprop engine, etc. Additionally, in still other example embodiments, the example turbine engine 10 may include or be operably connected to any other suitable accessory systems. Additionally, or alternatively, the example turbine engine 10 may not include or be operably connected to one or more of the accessory systems discussed above.

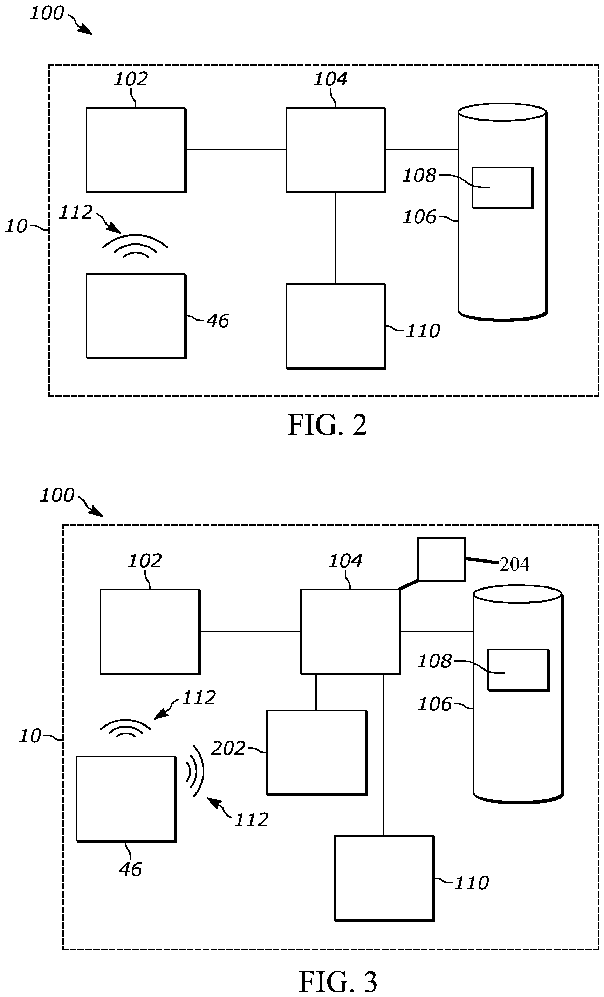

With reference now to FIG. 2, a turbine engine gearbox monitoring system 100 is shown. The turbine engine gearbox monitoring system 100 can be used in conjunction with the turbine engine 10 and in particular the gearbox 46 as shown in FIG. 2. In particular, the turbine engine gearbox monitoring system 100 can include a first acoustic sensor 102 located proximate to the gearbox 46 of the turbine engine 10 (e.g., the first acoustic sensor 102 is located in a position where the first acoustic sensor 102 is capable of receiving audio from the gearbox 46 such as between the gearbox 46 and an inlet to the HP turbine 28 of FIG. 1), a processor 104 operably connected to the first acoustic sensor 102, and a memory 106 operably connected to the processor 104. The memory 106 can have stored therein a plurality of acoustic signatures 108 indexed according to an associated operating condition or conditions of the turbine engine 10. In some embodiments, the turbine engine gearbox monitoring system 100 can also include a temperature sensor 110 that is located proximate to the gearbox 46 and that is operably coupled to the processor 104.

The processor 104 may include, for example, a microprocessor, a system-on-a-chip, an application specific integrated circuit (ASIC), and/or a field programmable gate array (FPGA). The memory 106 may include, for example, an electrical charge-based storage media such as electrically erasable programmable read-only memory (EEPROM) or random access memory (RAM), or other non-transitory computer readable media such as an optical or magnetic based storage device. The processor 104 may be operably coupled to or be a part of a full authority digital engine controller (FADEC). The FADEC generally has full authority over operating parameters of the turbine engine 10 and cannot be manually overridden. The FADEC generally functions by receiving a plurality of input variables of a current flight condition, including, but not limited to, air density, throttle lever position, engine temperature, engine pressure, and/or the like. The inputs are received, analyzed, and used to determine operating parameters such as, but not limited to, fuel flow, stator vane position, bleed valve position, and/or the like of the turbine engine 10. The FADEC may also control start and/or or restart operations of the turbine engine 10.

The operating conditions to which each of the plurality of acoustic signatures 108 are indexed can include specific operating states of the turbine engine 10. These operating states can include a ground idle state, a takeoff thrust state, a flight idle state, a cruise, and other dynamic or steady-state operating states of the turbine engine 10 that can be well defined and that last for a sufficient time duration to enable monitoring by the first acoustic sensor 102 and the processor 104.

In operation, the first acoustic sensor 102 is configured to output acoustic data representative of sound 112 emanating from and/or ambient to the gearbox 46. The processor 104 is configured to receive the acoustic data from the first acoustic sensor 102 and identify a current operating condition of the turbine engine 10. In some embodiments, the processor 104 identifies the current operating condition from flight data or additional sensor input received by the processor 104 (e.g., engine speed, wind speed, thrust demand, altitude, etc.). Additionally or alternatively, the processor 104 can receive a direct indicator of the current operating condition from other processing components of the turbine engine 10 such as the FADEC when the processor 104 is separate from the FADEC. Furthermore, the processor 104 can be configured to identify the current operating condition after the condition or indicators thereof are present for a minimum period of time associated with the turbine engine 10 coming into thermal equilibrium.

The processor 104 is also configured to select one of the plurality of acoustic signatures 108 in the memory 106 based on the current operating condition and generate comparison results using the one of the plurality of acoustic signatures 108 selected and the acoustic data. The processor 104 is also configured to identify that a maintenance condition is present for the gearbox 46 and/or the turbine engine 10 generally when the comparison results indicate a deviation (e.g. a difference as compared to the selected one of the plurality of acoustic signatures 108) that is greater than or equal to a preset threshold. In some embodiments, the preset threshold is at least three decibels. As described in more detail below, the deviation can represent a divergence in amplitude and/or frequency of the acoustic data. In some embodiments, the deviation can also correspond to sound being present in the gearbox 46 or other monitored component of the turbine engine 10 at an unexpected time. In some embodiments, the processor 104 identifies the maintenance condition as present once the deviation is present for at least a minimum period of time.

The maintenance condition can include a specific component failure or damage that degrades performance of the gearbox 46 and/or the turbine engine 10 generally and for which corrective action should be taken shortly. However, in some embodiments, the maintenance condition can include a prediction of an impending component failure or damage with respect to the gearbox 46 and/or the turbine engine 10 generally. In these embodiments, the turbine engine gearbox monitoring system 100 can anticipate the maintenance condition before substantial degradation in performance of the gearbox 46 and/or the turbine engine 10 has occurred.

In general, the acoustic data output by the first acoustic sensor 102 is a digital or analog representation of the sound 112 (e.g., a varying voltage and/or current signal that corresponds to the sound 112). The acoustic data can be a continuous signal between the first acoustic sensor 102 and the processor 104 or a time bounded analog or digital sample of the sound 112. As described in more detail below, the acoustic data can be time domain data or frequency domain data.

The plurality of acoustic signatures 108 can include previous acoustic data generated by the first acoustic sensor 102 during one or more test operations of the turbine engine 10 performed at each associated operating condition. Specifically, the plurality of acoustic signatures 108 can include digital or analog representations of the sound 112 output by a normally operating version of the turbine engine 10 at each of the operating conditions. The one or more test operations can include engine break-in or power assurance procedures performed following the initial build of the turbine engine 10 or following a subsequent maintenance action on the turbine engine 10. Additionally, in some embodiments, the processor 104 can be configured to fill out the plurality of acoustic signatures 108 with signatures for operating conditions of the turbine engine 10, for which there is not already an associated signature stored in the memory 106. This filling out of the plurality of acoustic signatures 108 can be done during the first opportunity to do so identified by the processor 104 such as a first stable flight operation that lasts for a minimum period of time to allow the turbine engine 10 to come to a thermal equilibrium (e.g., the first flight after installation of the turbine engine 10 on an aircraft or after maintenance of the turbine engine 10). Because the plurality of acoustic signatures 108 are filled out at the earliest opportunity to do so, the risk that one of the filled out signatures does not correspond to a normal operation of the turbine engine 10 is minimized.

The previous acoustic data that makes up the plurality of acoustic signatures 108 can be time domain data, frequency domain data, or both. Such time domain and frequency domain data corresponds to a normal or expected operation of the turbine engine 10 at a specific corresponding operating condition or set of conditions. As described above, the plurality of acoustic signatures 108 are indexed in the memory 106 according to the corresponding operating condition or set of conditions so that the processor 104 can select the time domain and/or frequency domain data that is associated with the current operating condition or conditions of the turbine engine 10 as identified by the processor 104 during operation of the turbine engine gearbox monitoring system 100. The plurality of acoustic signatures 108 can also include frequency domain data and/or time domain data generated from an acoustic sensor or sensors of a different turbine engine from the turbine engine 10 in which the turbine engine gearbox monitoring system 100 is employed. Similarly, in some embodiments, the plurality of acoustic signatures 108 include default acoustic data corresponding to an expected operation of the turbine engine 10 at each associated operating condition.

In some embodiments, the plurality of acoustic signatures 108 include a steady-state signature that does not correspond to the previous acoustic data generated by the first acoustic sensor 102 during one or more test operations of the turbine engine 10. Instead, the steady-state signature includes a running average of prior acoustic data output from the first acoustic sensor 102 during a current steady-state operation of the turbine engine 10 (e.g. a situation where the turbine engine 10 is maintaining a constant velocity and/or altitude). As such, the operating condition to which the steady-state signature is indexed includes a steady-state operating condition of the turbine engine 10. In this way, the plurality of acoustic signatures 108 do not need to include separate signatures for every possible steady-state operation of the aircraft and can instead track for the deviations under the general expectation that acoustic data corresponding to the sound 112, or a running average thereof, output form the gearbox 46 during any steady state operation is approximately uniform under normal operating conditions.

Furthermore, in some embodiments, additional ones of the plurality of acoustic signatures 108, like the steady-state signature described above, can be signatures that do not correspond to the previous acoustic data generated by the first acoustic sensor 102 during one or more test operations of the turbine engine 10. In these embodiments, these plurality of acoustic signatures 108 can include a similar running average of prior acoustic data output from the first acoustic sensor 102 and/or maximum or minimum value of the acoustic data received from the first acoustic sensor 102 at a specific frequency, range of frequencies, or for all frequencies (e.g., a maximum or minimum sound level for time domain analysis or a maximum or minimum frequency intensity for frequency domain analysis. Additionally, in some embodiments, the value of the preset threshold can be different for each of the associated operating conditions of the turbine engine 10. For example, where the selected one of the plurality of acoustic signatures 108 includes a maximum or minimum value, the processor 104 can compare the acoustic data received from the first acoustic sensor 102 at every frequency or at the specified frequency value or range to the maximum or minimum value and identify the maintenance condition as present when the deviation between the acoustic data and the maximum or minimum value is greater than or equal to preset threshold. In some of these embodiments, the preset threshold value can be set to zero or near zero for this type of the plurality of acoustic signatures 108, so that any deviation of the acoustic data below or above the maximum or minimum value will trigger identification of the maintenance condition.

Where the plurality of acoustic signatures 108 include the time domain data, such time domain data can be output by the first acoustic sensor 102 during one or more test operations of the turbine engine 10. In these embodiments, the acoustic data includes current time domain data corresponding to the sound 112 emanating from the gearbox 46. Furthermore, the processor 104 is configured to compare the current time domain data with the respective time domain data for the one of the plurality of acoustic signatures 108 selected by the processor 104 to generate the comparison results.

Where the plurality of acoustic signatures 108 include frequency domain data, such frequency domain data can be generated from outputs of the first acoustic sensor 102 during one or more test operations of the turbine engine 10. In particular, the frequency domain data can be a Fourier transformation (e.g., a Fast Fourier Transformation "FFT" or similar) of the time domain data output by the first acoustic sensor 102 during the one or more test operations of the turbine engine 10. This Fourier transformation can be done by the processor 104 or another similar system that is a part of or separate from the turbine engine 10 and the turbine engine gearbox monitoring system 100. Additionally, in some embodiments, the first acoustic sensor 102 can be configured to directly output frequency domain data instead of time domain data.

However, where the plurality of acoustic signatures 108 includes the frequency domain data and the first acoustic sensor 102 outputs time domain data, the processor 104 is further configured to transform (e.g., perform an FFT or similar) the current time domain data output by the first acoustic sensor 102 from the sound 112 into current frequency domain data. The processor 104 can then compare the current frequency domain data with the respective frequency domain data for the one of the plurality of acoustic signatures 108 selected by the processor 104 to generate the comparison results.

Various embodiments for determining when the comparison results indicate a deviation that is greater than or equal to the preset threshold are possible. For example, in some embodiments, the comparison results indicate a deviation that is greater than or equal to the preset threshold when an average difference between the one of the plurality of acoustic signatures 108 selected by the processor 104 and the acoustic data, or a transformation thereof, is greater than or equal to the preset threshold. Furthermore, in some embodiments, the comparison results indicate a deviation that is greater than or equal to the preset threshold when a difference between the one of the plurality of acoustic signatures 108 selected by the processor 104 and the acoustic data, or a transformation thereof, at one or more comparison points is greater than or equal to the preset threshold.

Comparison points between the one of the plurality of acoustic signatures 108 selected by the processor 104 and the acoustic data can include a same relative time location within each data set for time domain variations of the data and a same frequency value or binned range of frequency values for frequency domain variations of the data. In some embodiments, the data compared at each comparison point can include a decibel level or similar indicator of the magnitude or loudness of the sound 112 at the particular comparison point (e.g., the relative time location or the frequency value or binned range of frequency values).

With reference now to FIG. 3, it is shown that in some embodiments, the turbine engine gearbox monitoring system 100 can include one or more additional acoustic sensors 202 different from the first acoustic sensor 102. The one or more additional acoustic sensors 202 can be located proximate to the gearbox 46 and configured to output additional respective acoustic data responsive to the sound 112 emanating from the gearbox 46. In these embodiments, the plurality of acoustic signatures 108 are further indexed according to association with one of the first acoustic sensor 102 or the one or more additional acoustic sensors 202. In these embodiments, the processor 104 is further configured to receive the additional respective acoustic data from the one or more additional acoustic sensors 202. The processor 104 is also configured to select the one of the plurality of acoustic signatures 108 in the memory 106 additionally based on the association with the first acoustic sensor 102 and to select additional ones of the plurality of acoustic signatures 108 in the memory 106 based on the association with the one or more additional acoustic sensors 202 and the current operating condition of the turbine engine 10 identified by the processor 104. The processor 104 is also configured to generate the comparison results using the additional ones of the plurality of acoustic signatures 108 selected and the additional acoustic data such as by comparing the additional ones of the plurality of acoustic signatures 108 selected to the additional respective acoustic data or transformations thereof.

Furthermore, in these embodiments, the comparison results can indicate the deviation that is greater than or equal to the preset threshold when the acoustic data, or the transformation thereof, deviates from the one of the plurality of acoustic signatures 108 selected at the least one comparison point by at least the preset threshold. The comparison results also indicate the deviation that is greater than or equal to the preset threshold when the additional respective acoustic data, or the transformation thereof, deviates from the additional ones of the plurality of acoustic signatures 108 selected at one or more comparison points by at least the preset threshold (e.g., the maintenance condition is identified as present when the acoustic data from any of the first acoustic sensor 102 and the one or more additional acoustic sensors 202 shows the deviation). Alternatively, in some embodiments, the comparison results indicate the deviation that is greater than or equal to the preset threshold when the acoustic data, or the transformation thereof, deviates from the one of the plurality of acoustic signatures 108 selected at the one or more comparison points by at least the preset threshold and when the additional respective acoustic data, or the transformation thereof, deviates from the additional ones of the plurality of acoustic signatures 108 selected at the one or more comparison points by at least the preset threshold (e.g., the maintenance condition is identified as present when the acoustic data from all of the first acoustic sensor 102 and the one or more additional acoustic sensors 202 indicates the deviation). In other embodiments, the maintenance condition can be similarly identified as present when the acoustic data from at least a preset number of the first acoustic sensor 102 and the one or more additional acoustic sensors 202 shows the deviation. For example, if the turbine engine gearbox monitoring system 100 includes four or more acoustic sensors, the maintenance condition can be similarly identified as present when the acoustic data from at least two of the acoustic sensors shows the deviation. It will be appreciated that different values for the preset number of the acoustic sensors are possible.

The first acoustic sensor 102 and/or the one or more additional acoustic sensors 202 can be configured to generate the acoustic data from portions of the sound 112 within different frequency ranges. For example, in some embodiments, the portions of the sound 112 translated into the acoustic data can include portions that have a frequency in a range of about 25Hz to about 250Hz, which corresponds to the frequencies generated by input shaft speed of the LP turbine 30 (e.g. about 1500 rpm to about 15,000 rpm). In other embodiments, the portions of the sound 112 translated into the acoustic data can include portions that have a frequency in a range of about 20Hz to about 20kHz, which corresponds to the audible frequency range. In still other embodiments, the portions of the sound 112 translated into the acoustic data can include portions that have a frequency in a range of about 300Hz to about 3kHz, which corresponds to a tooth passing frequency for gears of the gearbox 46. In some embodiments, instead of the first acoustic sensor 102 and/or the one or more additional acoustic sensors 202 translating portions of the sound 112 having frequencies in one or more of the ranges described herein, the processor 104 and/or other components of the turbine engine gearbox monitoring system 100 such as low-pass filters, high-pass filters, band-pass filters etc. can further process the acoustic data to remove portions of the signals that are outside the relevant frequency ranges (e.g., about 25Hz to about 250Hz, about 20Hz to about 20kHz, and/or about 300Hz to about 3kHz).

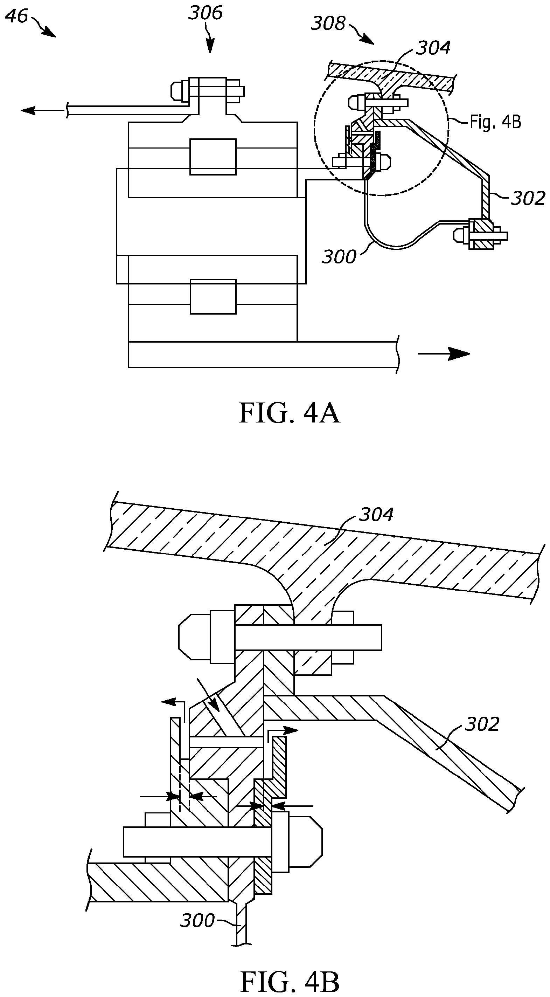

The first acoustic sensor 102 and/or the one or more additional acoustic sensors 202 can be located at various different locations proximate to the gearbox 46 and/or the drive system of the turbine engine 10 such as collocated with or adjacent to a bearing to detect bearing failures based on location and processing. For example, in FIGS. 4A and 4B, a mounted gearbox 46 according to some embodiments is shown. The first acoustic sensor 102 and/or the one or more additional acoustic sensors 202 may be mounted on a flex mount 300, a torque cone 302, an engine static structure 304, a gearbox housing 306, a gearbox mount 308, and/or other static or rotating engine structures proximate to the gearbox 46. The first acoustic sensor 102 and/or the one or more additional acoustic sensors 202 may be located in and/or on the gearbox 46 and/or on a nearby frame/ground plane in order to enable differential signal analysis. The flex mount 300, torque cone 302, and engine static structure 304 for mounting either of the first acoustic sensor 102 or the one or more additional acoustic sensors 202 are further shown and described in US Patent Publication 2023/0212987, which is incorporated by reference in its entirety. The gearbox housing 306 and gearbox mount 308 and other internal gearbox locations are further shown and described in US Patents 11,287,353 and 10,788,394, both of which are incorporated by reference in their entirety.

The first acoustic sensor 102 and the one or more additional acoustic sensors 202 can include single axis unidirectional microphones, triple axis multi-directional microphones or the like. Furthermore, in some embodiments, the first acoustic sensor 102 and the one or more additional acoustic sensors 202 may be replaced or supplemented by capacitive or inductive proximity sensors such as piezo electric sensors or accelerometers. Further still, in any embodiments, the first acoustic sensor 102 and the one or more additional acoustic sensors 202 may be wired or wirelessly connected to the processor 104.

In some embodiments, the processor 104 can activate an indicator 204 (FIG. 3) electrically coupled to the processor 104 in response to identifying that the maintenance condition is present. The indicator 204 can serve to notify the pilot and/or ground personnel of the maintenance issue. In some embodiments, the indicator 204 can include a maintenance message and/or a notification generated by the processor 104. The message or notification can be transmitted to and displayed on a display in the cockpit of the aircraft to notify the pilot of the issue. The message or notification can also be transmitted to one or more ground sources either immediately or when the aircraft next lands so as to trigger a maintenance process to correct the identified maintenance condition. In some embodiments, the indicator 204 can include a light in the cockpit or elsewhere on the aircraft that is activated by the processor 104 when the maintenance condition is identified as present. Furthermore, in some embodiments, the indicator 204 may be configured to output or indicate differing levels of severity depending on the magnitude, duration, and number of divergences detected between the acoustic data from the first acoustic sensor 102 and/or the one or more additional acoustic sensors 202 and relevant ones of the plurality of acoustic signatures 108 for the current operating condition of the turbine engine 10.

Additionally, in some embodiments, the processor 104 is further configured to verify that the maintenance condition is present using temperature data for the gearbox 46 received from the temperature sensor 110. The temperature data may include oil temperature or a dedicated temperature of the gearbox 46. The memory 106 can also have stored therein temperature values associated with normal operation of the gearbox 46 and/or the turbine engine 10 for comparison against the temperature data when used to confirm the presence of the maintenance condition.

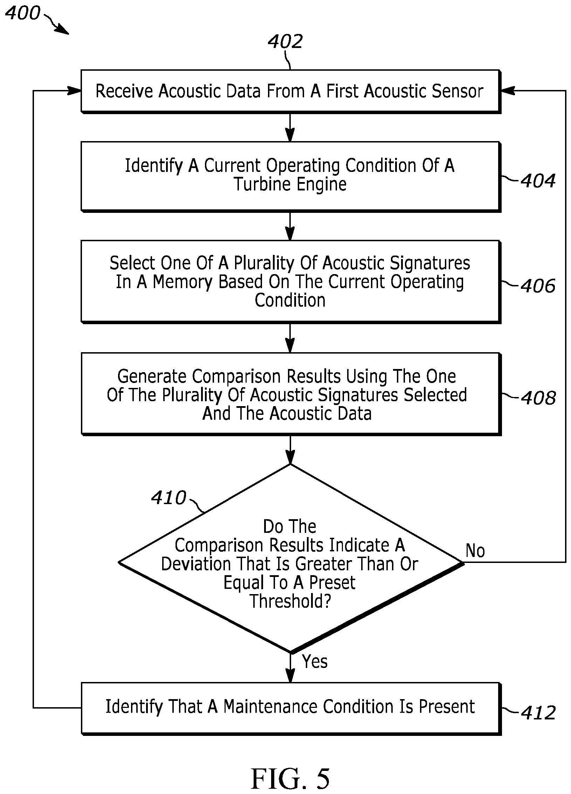

With reference to FIG. 5 and FIG. 2, the turbine engine gearbox monitoring system 100 can be used in connection with a method 400 for monitoring the turbine engine 10 and/or the gearbox 46. The method 400 includes receiving the acoustic data from the first acoustic sensor 102 at the processor 104, as in 402. The method 400 then includes identifying the current operating condition of the turbine engine 10, as in 404. Next, the method 400 includes selecting one of the plurality of acoustic signatures 108 in the memory 106 based on the current operating condition, as in 406. Then, the method 400 includes generating the comparison results using the one of the plurality of acoustic signatures 108 selected and the acoustic data, as in 408. Next, the method 400 includes determining whether the comparison results indicate the deviation that is greater than or equal to the preset threshold, as in 410. When the deviation that is greater than or equal to the preset threshold is present, the method 400 includes identifying that the maintenance condition is present for the gearbox 46, as in 412. Then, after identifying that the maintenance condition is present or determining that the deviation that is greater than or equal to the preset threshold is not present, the method 400 includes returning to step 402 to again receive the acoustic data from the first acoustic sensor 102.

It should now be understood that the turbine engine gearbox monitoring system 100 disclosed herein representants an improved system and performs an improved method for monitoring components of a turbine engine for the presence of a maintenance condition. In particular, the turbine engine gearbox monitoring system 100 utilizes more flexible acoustic sensors in conjunction with audio signal processing to identify when the turbine engine component is experiencing a maintenance condition. The use of acoustic sensors offers improved flexibility in sensor location and processing modification as compared with current systems.

Further aspects of the disclosure are provided by the subject matter of the following clauses:
A turbine engine gearbox monitoring system, the system comprising: a first acoustic sensor located proximate to a gearbox of a turbine engine, the first acoustic sensor configured to output acoustic data representative of sound emanating from the gearbox; a processor operatively connected to the first acoustic sensor, a memory operatively connected to the processor, the memory having stored therein a plurality of acoustic signatures indexed according to an associated operating condition of the turbine engine, wherein the processor is configured to: receive the acoustic data from the first acoustic sensor; identify a current operating condition of the turbine engine; select one of the plurality of acoustic signatures in the memory based on the current operating condition; generate comparison results using the one of the plurality of acoustic signatures selected and the acoustic data, and identify that a maintenance condition is present for the gearbox when the comparison results indicate a deviation that is greater than or equal to a preset threshold.

The system of any preceding clause, further comprising one or more additional acoustic sensors different from the first acoustic sensor, the one or more additional acoustic sensors located proximate to the gearbox of the turbine engine and configured to output additional respective acoustic data responsive to the sound emanating from the gearbox, wherein the plurality of acoustic signatures are further indexed according to association with one of the first acoustic sensor or the one or more additional acoustic sensors, and wherein the processor is further configured to: receive the additional respective acoustic data from the one or more additional acoustic sensors; select the one of the plurality of acoustic signatures in the memory additionally based on the association with the first acoustic sensor; select additional ones of the plurality of acoustic signatures in the memory based on the association with the one or more additional acoustic sensors and the current operating condition of the turbine engine; and generate the comparison results using the additional ones of the plurality of acoustic signatures selected and the additional respective acoustic data.

The system of any preceding clause, wherein the processor is configured to generate the comparison results by comparing the one of the plurality of acoustic signatures selected to the acoustic data or a transformation thereof and comparing the additional ones of the plurality of acoustic signatures selected to the additional respective acoustic data or transformations thereof, wherein the comparison results indicate the deviation that is greater than or equal to the preset threshold when the acoustic data or the transformation thereof deviates from the one of the plurality of acoustic signatures selected at one or more comparison points by at least the preset threshold, and wherein the comparison results also indicate the deviation that is greater than or equal to the preset threshold when the additional respective acoustic data or the transformation thereof deviates from the additional ones of the plurality of acoustic signatures selected at one or more comparison points by at least the preset threshold.

The system of any preceding clause, wherein the processor is configured to generate the comparison results by comparing the one of the plurality of acoustic signatures selected to the acoustic data or a transformation thereof and comparing the additional ones of the plurality of acoustic signatures selected to the additional respective acoustic data or transformations thereof, wherein the comparison results indicate the deviation that is greater than or equal to the preset threshold when the acoustic data or the transformation thereof deviates from the one of the plurality of acoustic signatures selected at one or more comparison points by at least the preset threshold and when the additional respective acoustic data or the transformation thereof deviates from the additional ones of the plurality of acoustic signatures selected at one or more comparison points by at least the preset threshold.

The system of any preceding clause, further comprising a temperature sensor located proximate to the gearbox, and wherein the processor is further configured to verify that the maintenance condition is present using temperature data for the gearbox received from the temperature sensor.

A method for monitoring a turbine engine gearbox, the method comprising: receiving acoustic data from a first acoustic sensor at a processor, the acoustic data being representative of sound emanating from a gearbox of a turbine engine; identifying a current operating condition of the turbine engine; selecting one of a plurality of acoustic signatures in a memory based on the current operating condition, the plurality of acoustic signatures being indexed in the memory according to an associated operating condition of the turbine engine; generating comparison results using the one of the plurality of acoustic signatures selected and the acoustic data; and identifying that a maintenance condition is present for the gearbox when the comparison results indicate a deviation that is greater than or equal to a preset threshold.

The method of any preceding clause further comprising: transforming current time domain data corresponding to the sound emanating from the gearbox into current frequency domain data, the acoustic data comprising the current time domain data, wherein the plurality of acoustic signatures include respective frequency domain data generated from outputs of the first acoustic sensor during one or more test operations of the turbine engine; and comparing the current frequency domain data with respective frequency domain data for the one of the plurality of acoustic signatures to generate the comparison results.

The systems and methods of any preceding clause, wherein the first acoustic sensor is located at a gearbox housing, a gearbox mount, a flex mount, torque cone, or other static or rotating engine structures proximate to the gearbox.

The systems and methods of any preceding clause wherein the first acoustic sensor includes a single axis unidirectional microphone or a triple axis multi-directional microphone.

The systems and methods of any preceding clause, wherein the comparison results indicate a deviation that is greater than or equal to the preset threshold when an average difference between the one of the plurality of acoustic signatures selected and the acoustic data or a transformation thereof is greater than or equal to the preset threshold.

The systems and methods of any preceding clause, wherein the comparison results indicate a deviation that is greater than or equal to the preset threshold when a difference between the one of the plurality of acoustic signatures selected and the acoustic data or a transformation thereof at one or more comparison points is greater than or equal to the preset threshold.

The systems and methods of any preceding clause, wherein the plurality of acoustic signatures includes default acoustic data corresponding to an expected operation of the turbine engine at each associated operating condition.

The systems and methods of any preceding clause, wherein the plurality of acoustic signatures includes previous acoustic data generated by the first acoustic sensor during one or more test operations of the turbine engine performed at each associated operating condition.

The systems and methods of any preceding clause, wherein the plurality of acoustic signatures includes a steady-state signature, wherein the associated operating condition to which the steady-state signature is indexed includes a steady-state operating condition of the turbine engine which includes a running average of prior acoustic data output from the first acoustic sensor during a current steady-state operation of the turbine engine.

The systems and methods of any preceding clause, wherein the preset threshold is at least three decibels.

The systems and methods of any preceding clause, wherein the first acoustic sensor translates portions of the sound emanating from the gearbox that have a frequency in a range of 25Hz to 250Hz into the acoustic data.

The systems and methods of any preceding clause, wherein the first acoustic sensor translates portions of the sound emanating from the gearbox that have a frequency in a range of 20Hz to 20kHz into the acoustic data.

The systems and methods of any preceding clause, wherein the first acoustic sensor translates portions of the sound emanating from the gearbox that have a frequency in a range of 300Hz to 3kHz into the acoustic data.

The systems and methods of any preceding clause, wherein the plurality of acoustic signatures include respective time domain data output by the first acoustic sensor during one or more test operations of the turbine engine, wherein the acoustic data includes a current time domain data corresponding to the sound emanating from the gearbox, and wherein the processor is further configured compare the current time domain data with the respective time domain data for the one of the plurality of acoustic signatures to generate the comparison results.

The systems and methods of any preceding clause, wherein the plurality of acoustic signatures include respective frequency domain data generated from outputs of the first acoustic sensor during one or more test operations of the turbine engine, wherein the acoustic data includes a current time domain data corresponding to the sound emanating from the gearbox, and wherein the processor is further configured to transform the current time domain data into current frequency domain data and compare the current frequency domain data with the respective frequency domain data for the one of the plurality of acoustic signatures to generate the comparison results.

The systems and methods of any preceding clause wherein an indicator is activated in response to identifying that the maintenance condition is present.

The systems and methods of any preceding clause wherein the indicator includes a maintenance message and/or a notification.

The systems and methods of any preceding clause wherein the message or notification is transmitted to and displayed on a display in a cockpit of an aircraft to notify the pilot of the issue.

The systems and methods of any preceding clause wherein the message or notification is transmitted to one or more ground sources either immediately or when the aircraft next lands so as to trigger a maintenance process to correct the maintenance condition.

The systems and methods of any preceding clause wherein the indicator includes a light in the cockpit or elsewhere on an aircraft that is activated when the maintenance condition is identified as present.

The systems and methods of any preceding clause wherein the indicator is configured to output or indicate differing levels of severity depending on a magnitude, duration, and number of divergences detected between the acoustic data from the first acoustic sensor and/or the one or more additional acoustic sensors and the plurality of acoustic signatures.

The systems and methods of any preceding clause wherein the maintenance condition is identified as present once the deviation is present for at least a minimum period of time.

The systems and methods of any preceding clause wherein the one or more test operations include engine break-in or power assurance procedures performed following initial build of the turbine engine or following a subsequent maintenance action on the turbine engine.

The systems and methods of any preceding clause wherein the plurality of acoustic signatures include frequency domain data and/or time domain data generated from an acoustic sensor or sensors of a different turbine engine from the turbine engine in which the first acoustic sensor is located.

The systems and methods of any preceding clause wherein the plurality of acoustic signatures are filled out with additional signatures for operating conditions of the turbine engine, for which there is not already an associated signature stored in the memory.

The systems and methods of any preceding clause wherein the filling out of the plurality of acoustic signatures is done during a first stable flight operation after installation of the turbine engine on an aircraft or after maintenance of the turbine engine, the first stable flight operation listing for a minimum period of time to allow the turbine engine to come to a thermal equilibrium.

## Claims

1. A turbine engine (10) gearbox (46) monitoring system (100), the system comprising:
a first acoustic sensor (102) located proximate to a gearbox (46) of a turbine engine (10), the first acoustic sensor (102) configured to output acoustic data representative of sound (112) emanating from the gearbox (46);
a processor (104) operatively connected to the first acoustic sensor (102); and
a memory (106) operatively connected to the processor (104), the memory (106) having stored therein a plurality of acoustic signatures (108) indexed according to an associated operating condition of the turbine engine (10),
wherein the processor (104) is configured to:
receive the acoustic data from the first acoustic sensor (102);
identify a current operating condition of the turbine engine (10);
select one of the plurality of acoustic signatures (108) in the memory (106) based on the current operating condition;
generate comparison results using the one of the plurality of acoustic signatures (108) selected and the acoustic data, and
identify that a maintenance condition is present for the gearbox (46) when the comparison results indicate a deviation that is greater than or equal to a preset threshold.

2. The system of claim 1, wherein the first acoustic sensor (102) translates portions of the sound (112) emanating from the gearbox (46) that have a frequency in a range of 25Hz to 250Hz into the acoustic data.

3. The system of claim 1, wherein the first acoustic sensor (102) translates portions of the sound (112) emanating from the gearbox (46) that have a frequency in a range of 20Hz to 20kHz into the acoustic data.

4. The system of claim 1, wherein the first acoustic sensor (102) translates portions of the sound (112) emanating from the gearbox (46) that have a frequency in a range of 300Hz to 3kHz into the acoustic data.

5. The system of claims 1, 2, 3, or 4, wherein the plurality of acoustic signatures (108) include respective time domain data output by the first acoustic sensor (102) during one or more test operations of the turbine engine (10), wherein the acoustic data includes a current time domain data corresponding to the sound (112) emanating from the gearbox (46), and wherein the processor (104) is further configured compare the current time domain data with the respective time domain data for the one of the plurality of acoustic signatures (108) to generate the comparison results.

6. The system of claims 1, 2, 3, or 4, wherein the plurality of acoustic signatures (108) include respective frequency domain data generated from outputs of the first acoustic sensor (102) during one or more test operations of the turbine engine (10), wherein the acoustic data includes a current time domain data corresponding to the sound (112) emanating from the gearbox (46), and wherein the processor (104) is further configured to transform the current time domain data into current frequency domain data and compare the current frequency domain data with the respective frequency domain data for the one of the plurality of acoustic signatures (108) to generate the comparison results.

7. The system of claim 1, 2, 3, 4, 5, or 6, wherein the comparison results indicate the deviation that is greater than or equal to the preset threshold when an average difference between the one of the plurality of acoustic signatures (108) selected and the acoustic data or a transformation thereof is greater than or equal to the preset threshold.

8. The system of claim 1, 2, 3, 4, 5, or 6, wherein the comparison results indicate the deviation that is greater than or equal to the preset threshold when a difference between the one of the plurality of acoustic signatures (108) selected and the acoustic data or a transformation thereof at one or more comparison points is greater than or equal to the preset threshold.

9. The system of any of claims 1-8, wherein the plurality of acoustic signatures (108) includes default acoustic data corresponding to an expected operation of the turbine engine (10) at each associated operating condition.

10. The system of any of claims 1-8, wherein the plurality of acoustic signatures (108) includes previous acoustic data generated by the first acoustic sensor (102) during one or more test operations of the turbine engine (10) performed at each associated operating condition.

11. The system of any of claims 1-8, wherein the plurality of acoustic signatures (108) includes a steady-state signature, wherein the associated operating condition to which the steady-state signature is indexed includes a steady-state operating condition of the turbine engine (10) which includes a running average of prior acoustic data output from the first acoustic sensor (102) during a current steady-state operation of the turbine engine (10).

12. The system of any of claims 1-11, wherein the preset threshold is at least three decibels.

13. The system of any of claims 1-12, further comprising a temperature sensor (110) located proximate to the gearbox (46), and wherein the processor (104) is further configured to verify that the maintenance condition is present using temperature data for the gearbox (46) received from the temperature sensor (110).

14. A method (400) for monitoring a turbine engine (10) gearbox (46), the method (400) comprising:
receiving acoustic data from a first acoustic sensor (102) at a processor (104), the acoustic data being representative of sound (112) emanating from a gearbox (46) of a turbine engine (10);
identifying a current operating condition of the turbine engine (10);
selecting one of a plurality of acoustic signatures (108) in a memory (106) based on the current operating condition, the plurality of acoustic signatures (108) being indexed in the memory (106) according to an associated operating condition of the turbine engine (10);
generating comparison results using the one of the plurality of acoustic signatures (108) selected and the acoustic data; and
identifying that a maintenance condition is present for the gearbox (46) when the comparison results indicate a deviation that is greater than or equal to a preset threshold.

15. The method (400) of claim 14 further comprising:
transforming current time domain data corresponding to the sound (112) emanating from the gearbox (46) into current frequency domain data, the acoustic data comprising the current time domain data, wherein the plurality of acoustic signatures (108) include respective frequency domain data generated from outputs of the first acoustic sensor (102) during one or more test operations of the turbine engine (10); and
comparing the current frequency domain data with respective frequency domain data for the one of the plurality of acoustic signatures (108) to generate the comparison results.
